# EUROPEAN PATENT APPLICATION

(11) **EP 2 141 127 A1**
(43) Date of publication of application: **06.01.2010**
(21) Application number: 09164465.8
(22) Date of filing: 02.07.2009
(51) Int. Cl.: C02F 1/28, C02F 1/78

(54) **An effluent treatment process**

(30) Priority: 02.07.2008 IE 20080548
(71) Applicant: O'Brien, Philip Patrick Peter, County Wexford (IE)
(72) Inventor: O'Brien, Philip Patrick Peter, Duncormick County Wexford (IE); Leonard, Owen Thomas, Dromahair County Leitrim (IE)
(74) Representative: O'Connor, Michael Donal

(57) **Abstract**

According to the invention there is provided a tertiary effluent treatment process for reducing the phosphate levels in effluent. The process comprises the steps of delivering effluent from a wastewater treatment plant to a primary filter, delivering the filtered effluent to a series of two or more phosphate removal filters, delivering the filtered phosphate-depleted effluent to a treated water tank as treated water, delivering the filtered phosphate-depleted effluent from the treated water tank to a discharge tank as treated water; and, discharging the treated water from the discharge tank as required. Each phosphate removal filter comprises a plurality of polymer-based beads having nano-particles of iron oxide coated thereon. The advantage of using a series of two or more phosphate removal filters is that the process can deliver a final effluent containing specific pre-determined levels of phosphate that may be as low as 0.01 mg/L of effluent, but will in all cases be below 1 mg/L. The series of two or more filters also allow the process to accommodate variations in the phosphate content of the effluent without affecting the level of phosphate in the discharge, and, the system can be retro-fit to the end of any type of existing waste water treatment plant or can be integrated into a new facility.

## Description

### Introduction

This invention relates to an effluent treatment process and an assembly for carrying out the effluent treatment process. More particularly, the present invention relates to an effluent treatment process and assembly for carrying out that process on final effluent that has already undergone prior treatment preferably in a biological effluent treatment plant. In particular, the invention is particularly designed to remove phosphorus from treated effluent to a level less than 0.02 mg/Litre.

Throughout the following description, it should be understood that the term "phosphate" can refer to either a composition comprising phosphorus or to the chemical element phosphorus itself, and, that any reference to "phosphate" should be interpreted as such.

A significant challenge facing local authorities is to ensure that adequate effluent treatment facilities are provided for both new and existing housing developments in remote areas where connection to a centralised effluent treatment plant is either uneconomical or impractical and dedicated effluent treatment facilities for the housing development are provided. The effluent, including but not limited to raw sewage, from the housing development must be handled in a very careful and comprehensive manner to ensure that no threat is posed to the residents or to the environment. It is desirable to treat the effluent to such a degree that the majority of the treated effluent may be released as surface water and the maximum amount of harmful substances from the effluent are captured and disposed of subsequently in a safe manner.

A particular problem with known processes is that treated effluents still typically contain high levels of phosphate, suspended solids, chemical oxygen demands (CODs) and biological oxygen demands (BODs) which are harmful to the environment. Phosphate can be particularly harmful as high levels of phosphate in water systems leads to eutrophication of the water system which will encourage the growth and decomposition of oxygen-depleting plants such as algal bloom, and result in harm to other organisms including fish. As a result of these environmental concerns, many countries, including Ireland, the United Kingdom, other European countries and the USA, have set the limit for total phosphorus concentrations in discharges of wastewater treatment plants at 1 mg/Litre or in some cases even less.

Several effluent treatment processes comprising phosphate treatment stages have been proposed to date. Phosphate treatment is conventionally carried out using one of two principal methods. The level of phosphate is reduced by a chemical precipitation or by an enhanced biological removal method. The biological removal method tends to be favoured as it has a lower overall operating cost, when compared with the chemical precipitation method, however, the biological removal method may not be as reliable and cannot achieve the same levels of phosphate removal as a well-run chemical precipitation method.

There are problems with both of these existing methods. Both methods are largely unreliable when the level of phosphorus is required to be reduced below 1 mg/Litre. Phosphorous occurs in wastewater as organic phosphorous derived from food. The average content of phosphorous in crude wastewater is said to be about 10 mg/L. Following primary and secondary treatment of the crude wastewater in primary and secondary effluent treatment plants. Following a typical biological treatment of sewage, which reduces levels of BOD by 90%, the residual level of phosphorous in the effluent stream will be from 2.5 mg/L to 17.5 mg/L depending on the levels of phosphate in chemicals used in the primary and secondary treatment plants. New legislation requires that the residual level of phosphorous in the effluent stream be below 1 mg/Litre or 2mg/Litre in some cases.

The existing methods using the biological and chemical methods are incapable of adjusting to fluctuating levels of phosphate in the effluent as the methods are typically set up to introduce a predetermined amount of the biological or chemical substance into the effluent as the effluent flows through the treatment stage.

Furthermore, existing methods do not allow for the recovery of the phosphate once it has been removed from the effluent. Phosphate can be used in a number of byproducts, such as in fertiliser, to great effect, and the recovery of the phosphate removed from the effluent will allow for the incorporation of the phosphate into byproducts which is efficient and financially advantageous.

A further problem with the existing methods is that many of the methods produce large volumes of sludge which is expensive to dispose of in a secure and safe manner.

Known phosphate removal filtering systems are described in WO2007/131522 (BIOPTECH HOLDING AB) and EP0607019 (STEP THREE). Both of these effluent treatment filtering systems describe a primary filter for removing suspended solids from wastewater, followed by one or more further filtering stages to further purify the wastewater, wherein one of the further stages is a phosphate removal filter. It is important to note that only one filtering stage in each of the systems disclosed in these prior art documents is used to filter out phosphates. Such an arrangement has been found to lead to problems when varying amount of phosphates are present in the wastewater. Due to the varying amounts of phosphate, the proposed solutions may not always be sufficient to reduce the phosphate levels to below 1 mg/Litre. Both of the prior art documents describe a phosphate removal filtering stage which uses a sorbent material such as Opoka rock or Alumina. Such sorbent materials are not always ideal for reducing the phosphate levels to below 1 mg/Litre.

It is an object of the present invention to provide an effluent treatment process and assembly for carrying out the process that overcomes at least some of the problems with the known processes. In particular, it is an object of the present invention to provide an effluent treatment process and assembly for carrying out a process that removes high levels of phosphate from the effluent without any of the above-mentioned problems

### Statements of Invention

According to the invention there is provided a tertiary effluent treatment process comprising the steps of delivering effluent from a wastewater treatment plant to a primary filter to remove suspended solids and particles having a diameter greater than 5 microns from the effluent; delivering, at a predetermined rate, the filtered effluent to a series of two or more phosphate removal filters, each phosphate removal filter comprising a plurality of polymer-based beads having nano-particles of iron oxide coated thereon; delivering the filtered phosphate-depleted effluent to a treated water tank as treated water; delivering the filtered phosphate-depleted effluent from the treated water tank to a discharge tank as treated water; and, discharging the treated water from the discharge tank as required.

The present invention comprises a unique ability to deliver a final effluent containing specific pre-determined levels of phosphate that may be as low as 0.01 mg/L of effluent, but will in all cases be below 1 mg/L due to the use of the series of two or more phosphate removal filters. Moreover, the process can accommodate variations in the phosphate content of the effluent without affecting the level of phosphate in the discharge, and, the system can be retro-fit to the end of any type of existing waste water treatment plant or can be integrated into a new facility. The ability to guarantee such low levels of phosphate is required in some jurisdictions by legislation, and the above arrangement allows the effluent treatment process to meet the new legislative requirements regardless of the phosphate levels in the effluent.

Furthermore, due to the set-up of the system, the removal of phosphate from the effluent is achieved without increasing the overall level of sludge produced by the waste water treatment plant, and, phosphate is removed in a manner that will allow it to be recovered in pure form for future use. Thus, the system can be adapted to any scale of treatment plant, and, the system can be utilised to remove phosphate from other water-based solutions, for example industrial effluent or drinking water.

A further advantage is that the system of preparation of the effluent ensures that the phosphate absorption filters operate under optimum conditions, and, the system also advantageously uses a phosphate removal medium which can be regenerated once it has absorbed its capacity of phosphate.

By having such a process, a large proportion of the effluent may be released as surface water with the minimum risk to the environment. The primary filter will trap a significant portion of harmful particles before the effluent is passed through the series of two or more dedicated phosphate removal filters once the majority of harmful particles have already been removed from the effluent, thereby allowing highly effective removal of phosphate from the effluent. Once treated in this manner, the phosphate and other contaminant-depleted treated effluent may be discharged, preferably as surface water.

This process may reduce the overall cost of handling the effluent as the vast majority of harmful materials are successfully removed from the effluent without subsequent processing being required. Furthermore, the process allows for significant amounts of phosphate to be removed from the process allowing the resulting treated effluent to be discharged as surface water or into the environment without the treated effluent posing a significant danger to the environment. Furthermore, the treated effluent could be reused as grey water or non-potable water in a domestic or other environment.

In a further embodiment, the process further comprises the step of backwashing at least one of the two or more phosphate removal filters with treated water from the treated water tank at pre-determined backwashing intervals.

Such a backwashing process has not been known with phosphate removal filters until now. The inclusion of such this process allows relatively large suspended particles larger than 5 microns that either passed through the primary filter, or that were created after the primary filter due to the joining of smaller suspended particles, to be backwashed out of the phosphate removal filters. This increases the operable working time for the phosphate filters.

In a further embodiment, the process further comprises the step of backwashing at least one of the two or more phosphate removal filters only with treated water from the treated water tank at pre-determined backwashing intervals.

By storing the treated water in the treated water tank tank, rather than delivering the treated water directly to the discharge tank to run off as surface water immediately, the treated water may be advantageously used in this backwashing process which will reduce the cost of operating the effluent treatment process.

In a further embodiment, the process further comprises the steps of testing the effluent and determining one or more effluent properties; analysing the determined effluent properties to detect if the effluent is suitable to be further treated by the effluent treatment process; and, returning effluent with unsuitable effluent properties to the wastewater treatment plant for further processing prior to redelivery of this further processed effluent back to the primary filter; or, passing effluent with suitable effluent properties on to be further processed by the effluent treatment process.

By returning effluent with unsuitable effluent properties to the wastewater treatment plant for further processing prior to redelivery of this further processed effluent back to the primary filter, effluent having unsuitable properties for efficient operation of the phosphate removal filters may be rejected, thus increasing the working life of the filtering medium, a plurality of polymer-based beads having nano-particles of iron oxide coated thereon, in the phosphate removal filters.

In a further embodiment, the one or more effluent properties comprises the phosphate level of the effluent.

In a further embodiment, the one or more effluent properties comprises the volume of effluent.

In a further embodiment, the one or more effluent properties comprises the amount of bacteria in the effluent.

In a further embodiment, the one or more effluent properties comprises the level of turbidity of the effluent.

In a further embodiment, the one or more effluent properties comprises the amount of silica in the effluent.

In a further embodiment, the process further comprises the steps of testing the phosphate level of the treated water in the discharge tank and delivering a predetermined amount of effluent from an output of the primary filter directly to the discharge tank, by-passing the series of two or more phosphate removal filters, until the phosphate level of the treated water has increased to a desired level; and, discharging the treated water having the desired phosphate level from the discharge tank.

This step will allow unnecessary treatment of the wastewater to be avoided by controlling the system to deliver treated water with a predetermined level of phosphate from the discharge tank, regardless of the varying phosphate levels in the effluent.

In a further embodiment, the process further comprises the steps of regenerating the plurality of polymer-based beads in at least one of the two or more phosphate removal filters by flushing the phosphate removal filter with a dilute alkaline solution, and subsequently flushing the phosphate removal filter with a brine and carbon dioxide (CO₂) solution in order to reduce the pH levels of the plurality of polymer-based beads in the phosphate removal filter back down to an acceptable level; collecting the flushed dilute alkaline solution that is output from the phosphate removal filter in a sedimentation tank, and, allowing the collected solution to settle over a predetermined settlement period; and, extracting the dilute alkaline solution from the sedimentation tank to re-circulate through the phosphate removal filters.

In a further embodiment, the process further comprises the steps of making up the dilute alkaline solution with at least part treated water from the treated water tank and part re-circulated dilute alkaline solution from the sedimentation tank.

By storing the treated water in the treated water tank, rather than allowing the treated water to be delivered to the discharge tank and run off as surface water immediately, the treated water may be advantageously used to make up the dilute alkaline solution which is used in the regeneration process of the filter medium in the phosphate removal filters. This will greatly reduce the cost of operating the effluent treatment process.

In a further embodiment, the process further comprises the step of adding chlorine to the filtered effluent prior to delivering the filtered effluent to the series of two or more phosphate removal filters.

In a further embodiment, each of the plurality of polymer-based beads comprises a plurality of cavities and channels so as to form a sponge-like constitution, whereby substantially all of the surfaces in the cavities, in the channels and on the exterior of the bead are coated with nano-particles of iron oxide.

The advantage of using the polymer-based beads having a sponge-like constitution is that a large amount of nano-particles of iron oxide may be coated on the large surface area available as a result of the sponge-like constitution. The nano-particles of iron oxide offer high capacity, high surface area and rapid kinetics properties. Thus, the polymer based beads impregnated with iron oxide nano-particles are seen as a particularly effective substance for removing the phosphate from the effluent, and furthermore, they allow for relatively simple backwashing and achieve good longevity in service.

The invention is further directed towards a tertiary effluent treatment assembly comprising an inlet to receive effluent from a wastewater treatment plant, a primary sand filter to remove suspended solids and particles having a diameter greater than 5 microns from the effluent received from the wastewater treatment plant; a series of two or more phosphate removal filters to receive the filtered effluent, each phosphate removal filter comprising a plurality of polymer-based beads having nano-particles of iron oxide coated thereon; a treated water tank to receive the filtered phosphate-depleted effluent as treated water; a discharge tank to receive the treated water from the treated water tank; and, an outlet to discharge the treated water from the discharge tank.

### Detailed Description of the Invention

The invention will now be more clearly understood from the following description of some embodiments thereof given by way of example only, in which:
Figure 1 is a diagrammatic representation of a first effluent treatment process assembly according to the present invention; and,
Figure 2 is a diagrammatic representation of a second effluent treatment process according to the present invention.

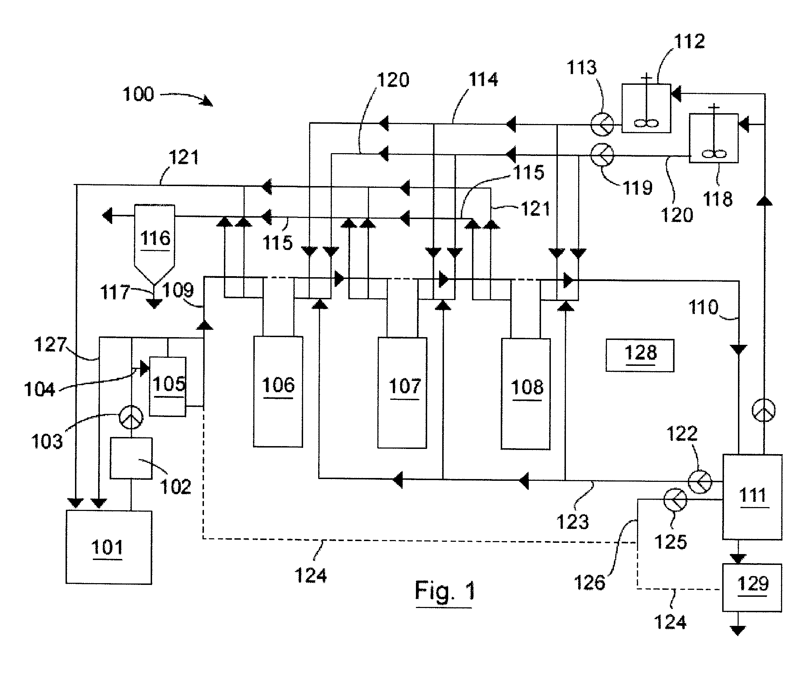

Referring to Fig. 1, there is shown an effluent treatment assembly, indicated generally by the reference numeral 100, comprising a waste water treatment plant 101 from which partially treated sewage coming is collected in a sump 102. The partially treated sewage is delivered by a pump 103, at a pre-determined rate, through a conduit 104 to a primary filter 105. The effluent may be analysed, to determine flow rate, pH level, turbidity and phosphate content en route to the primary filter 105 or directly subsequent to the primary filter 105. If the effluent does not meet the required criteria, control valves (not shown) will divert the effluent back to the primary wastewater treatment plant 101. The user may select the levels of the above mentioned criteria, and based on these selected levels of the criteria, the effluent may be diverted back to the primary wastewater treatment plant 101.

The effluent will be passed through the primary filter 105, which in the present embodiment is a sand filter, although it is envisaged that other types of filters may be used instead of the sand filter, to a series of phosphate removal filters 106, 107, 108 which reduce the level of phosphate in the water. The effluent is passed through a conduit 109 to the plurality of phosphate removal filters 106, 107, 108. The phosphate removal filters 106, 107, 108 each comprise a phosphate removal medium of polymer based beads impregnated with iron oxide nano-particles.

Three phosphate removal filters 106, 107, 108 are shown in Fig. 1, however, any number of filters greater than one may be used dependent on factors including but not limited to the flow rate of the effluent to be treated; the volume of phosphate removal media within each filter 106, 107, 108; the level of phosphate in the effluent; the required contact time of the effluent with the phosphate removal media within each filter 106, 107, 108; the required interval between back washing procedures for each filter 106, 107, 108; the required interval between regeneration procedures for each filter 106, 107, 108; and, the level of redundancy which may be required in the effluent treatment assembly 100 to allow continuous operation whilst some of the filters 106, 107, 108 are either being backwashed or regenerated. The use of the three filters 106, 107, 108 allows one or more of the filters to be backwashed or regenerated whilst the remaining filter or filters continue to operate as normal. This allows the effluent treatment assembly 100 to operate continuously without having to stop for maintenance to be carried out.

Once treated, the effluent is passed through an outlet conduit 110 to a treated water tank 111 where it is held for possible future as a backwashing agent, or, as part of regeneration solutions. The treated water that is not used in the backwashing or regeneration processes, both of which are described below, is delivered to the discharge tank 129 to be discharged as surface water.

The phosphate removal medium has a certain capacity to absorb phosphate after which it must be regenerated. That is to say, the phosphate removal medium has to be flushed out with a dilute alkaline solution, acting as a regeneration solution, to remove the accumulated phosphate from the phosphate removal filters 106, 107, 108. The effluent treatment assembly 100 incorporates a mixing tank 112, in which the dilute alkaline solution is prepared by mixing the chemicals with treated water from the treated water tank 111. The chemical solution is delivered to each of the filters 106, 107, 108 as required under pressure produced by a pump 113, along a conduit 114, controlled by a system of associated valves (not shown). The selection of which of the filters 106, 107, 108 is to be regenerated may be achieved manually or automatically by a controller 128. The dilute alkaline solution along with the phosphate removed from the filters 106, 107, 108 passes along a conduit 115, to a sedimentation tank 116, where the phosphate settles, after further treatment, in the form of sludge at the bottom of the sedimentation tank 116 and may be subsequently pumped to the wastewater treatment plant 101 via a conduit 117. Alternatively, the phosphate may be recovered from the sludge in the sedimentation tank 116 for use as a fertiliser for example, and, the dilute alkaline solution may be recovered from the sedimentation tank 116 to be re-circulated through the filters 106, 107, 108 again.

After rinsing the phosphate removal medium in the filters 106, 107, 108 with the dilute alkaline solution, the phosphate removal medium in the filters 106, 107, 108 must be rinsed with a brine and CO₂ solution in order to bring the pH level in the filters 106, 107, 108 back to within an ideal operating range. The brine and CO₂ flushing system comprises a mixing tank 118, delivery pump 119, a delivery conduit 120, and return conduit 121 to the wastewater treatment tank 101, complete with associated valves and controls (not shown). The brine and CO₂ solution may be prepared by mixing the constituent components with treated water from the treated water tank 111.

The phosphate removal filters 106, 107, 108 accumulate particles which have passed through the primary filter 105. Thus, the phosphate removal filters 106, 107, 108 are backwashed from time to time. Treated water from the treated water tank 111 is used to backwash the phosphate removal filters 106, 107, 108 and unclog the phosphate removal filters 106, 107, 108 by removing these particles at pre-determined intervals. The treated effluent is pressurised by a pump 122, and delivered through a conduit 123, with associated control valves (not shown) to each phosphate removal filter 106, 107, 108 as required. The backwashed treated effluent is returned by the conduit 121 to the waste water treatment plant 101.

The treated effluent in the discharge tank 129 may be mixed with effluent which has passed through the primary filter 105 and has by-passed the phosphate removal filters 106, 107, 108 along a conduit 124, in order to produce a final discharge effluent containing a specific pre-determined phosphate content.

In a further embodiment, the primary filter 105 may contain an anti bacteriological medium (not shown) to kill off any bacteria which might grow within the primary filter 105 or the phosphate absorption filter, causing malfunction or blockage.

Furthermore, the primary filter 105 will need to be backwashed at pre-determined intervals, in order to remove any accumulated particles and thus maintain ideal operating conditions for the primary filter 105. The backwash solution is delivered by a pump 125, through a conduit 126, from the treated water tank 111. Having passed through the primary filter 105, the backwash solution will be returned via a conduit 127 to the waste water treatment plant 101.

The effluent treatment assembly 100 may incorporate other means of controlling the growth of bacteria such as by the injection of chlorine or by exposure to ozone prior to the primary filter 105. Ozone will cause flocculation of the remaining harmful particles in the effluent thereby facilitating their subsequent removal in the primary filter 105.

When the effluent treatment assembly 100 is operating at a plant where the final effluent is to include a specific content of phosphate which is higher than that pertaining after passage of the effluent through the phosphate filtration system, control valves may be installed which will allow an amount of the effluent to bypass the phosphate removal filters 106, 107, 108 along a conduit 124, in order to add back a calculated amount of phosphate in line with the required limit. In this manner the removal of unnecessary amounts of phosphate will be avoided.

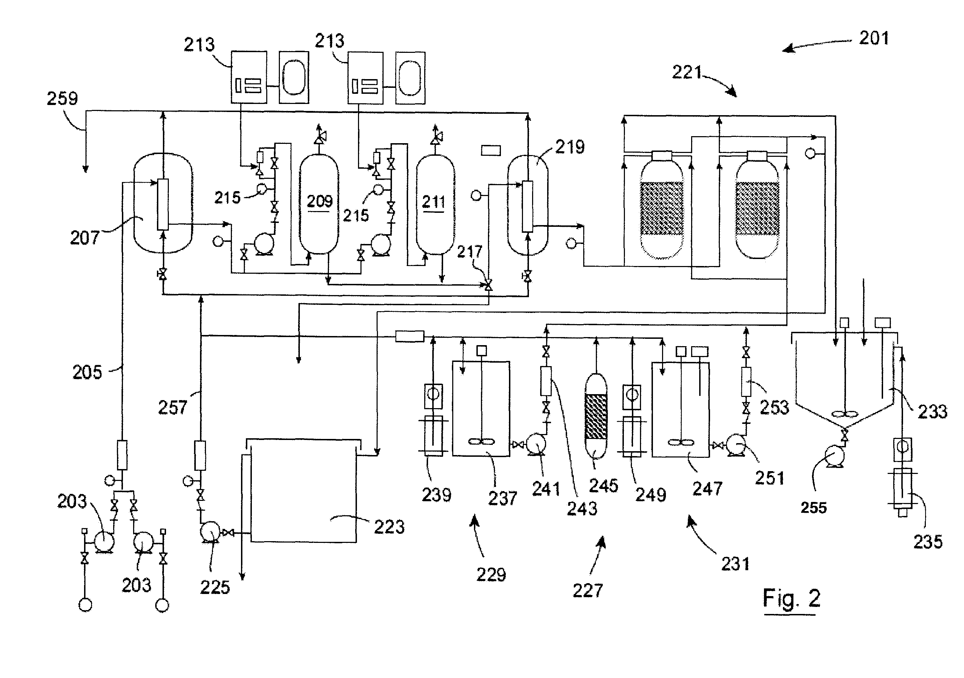

Referring to Fig. 2, there is illustrated an effluent treatment assembly, indicated generally by the reference numeral 201, comprising a pair of inlet pumps 203 and an inlet conduit 205 located intermediate a balance tank (not shown) and a primary filter 207. The primary filter feeds a contact vessel 209, 211, each of which has an ozone generator 213 and ozone injection apparatus 215 associated therewith. The effluent treatment assembly 201 further comprises a secondary filter 219, a phosphate removal filter 221, a storage tank 223 and a backwash pump 225 is associated with the storage tank 223. A further phosphate removal filter backwashing assembly, indicated generally by the reference numeral 227, is provided and comprises a caustic dosing system 229, a brine and CO₂ dosing system 231, a backwash clarifier 233 and a pH correction unit 235.

The caustic dosing system 229 comprises a caustic solution make-up vessel 237, a caustic dosing unit 239, a backwash pump 241 and a plurality of valves 243. The brine and CO₂ dosing system 231 further comprises a CO₂ tank 245, a brine solution make-up vessel 247, a brine dosing unit 249, a backwash pump 251 and a plurality of valves 253. The backwash clarifier 233 further comprises a sludge pump unit 255 associated therewith. The assembly further comprises a divert valve 217 intermediate the contact vessels 209, 211 and the secondary filter 219 and the balance tank (not shown). The effluent treatment assembly further comprises a network of conduits connecting the various pieces of the assembly and valves that are operable to control the flow of effluent in the assembly.

In use, effluent is delivered from a balance tank (not shown) to the primary filter 207 by the inlet pumps 203 and inlet conduit 205. The effluent is filtered in the primary filter to remove suspended solids from the effluent. In the primary filtrations steps, the concentration of harmful substances is typically reduced from of the order of thirty parts per million (ppm) down to of the order of 10ppm. After filtration, the filtered effluent is delivered through conduits to the contact vessel 209, 211 and ozone is added to the filtered effluent en route to the contact vessels. The ozone and filtered effluent are left in the contact vessel for a predetermined period of time, preferably between four and twenty minutes. Ideally, the ozone and filtered effluent are left in the contact vessel for a minimum of five minutes. Once the ozone and filtered effluent have been left in the contact vessel for a sufficient period of time, the ozone and filtered effluent mixture is monitored by an effluent quality unit (not shown) which monitors the quality of the effluent. If the effluent is not suitable for onward progression to the secondary filter, the effluent quality unit operates the divert valve 217 so that the filtered effluent and ozone mixture is returned to the balance tank (not shown). If the effluent quality unit detects that the ozone and filtered effluent is suitable for onward progression, the effluent quality unit operates the divert valve 217 so that the ozone treated effluent is delivered to the secondary filter 219. The ozone acts as a flocculating agent for the filtered effluent causing many of the remaining harmful components to bind with each other to form larger components that may be filtered out of the effluent. Further suspended solids are removed from the ozone treated effluent in the secondary filter 219.

Having passed through the secondary filter 219, the twice filtered effluent is passed to the phosphate removal filter 221. The phosphate removal filter preferably comprises a filter medium of polymer based beads impregnated with iron oxide nano-particles. After the secondary filtration and the phosphate removal filtration, the harmful component concentration is reduced further from above the order of 10ppm down to of the order of better than 10ppm, where the harmful components combine BOD, Suspended Solids and Phosphate, and, the amount of BOD is between 0ppm and 5ppm, the amount of Suspended Solids is between 0ppm and 5ppm and the level of phosphate is approximately 0.1ppm, with a reduction in biological oxygen demand (BOD) and chemical oxygen demand (COD). The resulting phosphate and other contaminant-depleted treated effluent is then transferred from the phosphate removal filter 221 to the storage tank 223 from where the treated effluent may be sampled if desired before being discharged as surface water.

The storage tank 223 is sufficiently large that it will keep a supply of treated phosphate and other contaminant-depleted effluent to backwash the primary and secondary filters. A backwash pump 225 and conduits 257 are connected intermediate the storage tank 223 and both the primary filter 207 and the secondary filter 219 to backwash the primary and the secondary filter with treated phosphate and other contaminant-depleted effluent. Further conduits 259 are provided from the primary filter 207 and the secondary filter 219 and lead to an effluent biological treatment plant (not shown). These conduits 259 carry the backwash from the primary and secondary filters to the effluent biological treatment plant (not shown). The effluent biological treatment plant is used to treat the backwash prior to delivering the treated backwash to the balance tank (not shown) for application of the currently described process to the backwash. Essentially therefore, the backwash will be treated in the same way as effluent passing through the system.

The phosphate removal filter backwashing assembly 227 is used to backwash the phosphate removal filter 221. A supply of treated phosphate and other contaminant-depleted effluent is supplied to the caustic solution make-up vessel 237 and the brine solution make-up vessel 247 by the backwash pump 225 and the conduit 257. The caustic dosing system 229 and the brine and CO₂ dosing system 231 combine to provide a backwash to the phosphate removal filters. This backwash is then transferred to the backwash clarifier where the backwash from the phosphate removal filters has lime added to it and mixed with it. This mixture is allowed to settle in the backwash clarifier until a lime sludge and a clarified liquid are formed. The lime sludge is transferred to a lime sludge storage unit (not shown) and the clarified liquid is pumped to the effluent biological treatment plant. If necessary, the pH correction unit 35 may be used to alter the pH level of the clarified liquid if desired.

Typically, in a well-run effluent treatment plant, effluent having a quality of 20ppm BOD, 30ppm Suspended Solids and 10ppm Phosphate will be provided. Under those circumstances, the present invention would expect to produce a treated effluent quality better than 5ppm BOD, 5ppm Suspended Solids and 0.1ppm Phosphate. Using the hereinbefore described effluent treatment process, the following results were found:

| | **BOD mg/ L** | **SS mg/L** | **P mg/L** | **% P removed** |
|---|---|---|---|---|
| Effluent to test rig | 9.20 | 18.0 | 2.44 | |
| Post sand filter | 2.00 | 2.00 | 2.00 | |
| Post Phosphate removal filters | 0.10 | <1.0 | <0.02 | >99.2 |

However, it will be understood that in certain circumstances, the quality of effluent that must be treated by the process according to the present invention may exceed the above amounts and accordingly the performance of the process and the quality of treated effluent will be affected. Similarly, the times required for treating the effluent with ozone may also have to be lengthened in order to ensure effluent of a sufficient standard is treated by the process according to the present invention.

In this specification, the terms "comprise, comprises, comprised and comprising" and the terms "include, includes, included and including" are all deemed totally interchangeable and should be afforded the widest possible interpretation.

The invention is in no way limited to the embodiments hereinbefore described but should be afforded the widest possible interpretation.

## Claims

1. A tertiary effluent treatment process comprising the steps of:
i) delivering effluent from a wastewater treatment plant to a primary filter to remove suspended solids and particles having a diameter greater than 5 microns from the effluent;
ii) delivering, at a predetermined rate, the filtered effluent to a series of two or more phosphate removal filters, each phosphate removal filter comprising a plurality of polymer-based beads having nano-particles of iron oxide coated thereon;
iii) delivering the filtered phosphate-depleted effluent to a treated water tank as treated water; and,
iv) delivering the filtered phosphate-depleted effluent from the treated water tank to a discharge tank as treated water, and discharging the treated water from the discharge tank as required.

2. A tertiary effluent treatment process as claimed in claim 1, wherein, the process further comprises the step of:
v) backwashing at least one of the two or more phosphate removal filters with treated water from the treated water tank at pre-determined backwashing intervals.

3. A tertiary effluent treatment process as claimed in claim 1, wherein, the process further comprises the step of:
vi) backwashing at least one of the two or more phosphate removal filters only with treated water from the treated water tank at pre-determined backwashing intervals.

4. A tertiary effluent treatment process as claimed in any preceding claim, wherein, the process further comprises the steps of:
vii) testing the effluent and determining one or more effluent properties;
viii) analysing the determined effluent properties to detect if the effluent is suitable to be further treated by the effluent treatment process; and,
ix) returning effluent with unsuitable effluent properties to the wastewater treatment plant for further processing prior to redelivery of this further processed effluent back to the primary filter; or, passing effluent with suitable effluent properties on to be further processed by the effluent treatment process.

5. A tertiary effluent treatment process as claimed in claim 4, wherein, the one or more effluent properties comprises the phosphate level of the effluent.

6. A tertiary effluent treatment process as claimed in claims 4 or 5, wherein, the one or more effluent properties comprises the volume of effluent.

7. A tertiary effluent treatment process as claimed in claims 4 to 6, wherein, the one or more effluent properties comprises the amount of bacteria in the effluent.

8. A tertiary effluent treatment process as claimed in claims 4 to 7, wherein, the one or more effluent properties comprises the level of turbidity of the effluent.

9. A tertiary effluent treatment process as claimed in claims 4 to 8, wherein, the one or more effluent properties comprises the amount of silica in the effluent.

10. A tertiary effluent treatment process as claimed in any preceding claim, wherein, the process further comprises the steps of:
x) testing the phosphate level of the treated water in the discharge tank and delivering a predetermined amount of effluent from an output of the primary filter directly to the discharge tank, by-passing the series of two or more phosphate removal filters, until the phosphate level of the treated water has increased to a desired level; and,
xi) discharging the treated water having the desired phosphate level from the discharge tank.

11. A tertiary effluent treatment process as claimed in any preceding claim, wherein, the process further comprises the steps of:
xii) regenerating the plurality of polymer-based beads in at least one of the two or more phosphate removal filters by flushing the phosphate removal filter with a dilute alkaline solution, and subsequently flushing the phosphate removal filter with a brine and carbon dioxide (CO₂) solution in order to reduce the pH levels of the plurality of polymer-based beads in the phosphate removal filter back down to an acceptable level;
xiii) collecting the flushed dilute alkaline solution that is output from the phosphate removal filter in a sedimentation tank, and, allowing the collected solution to settle during a predetermined settlement period; and,
xiv) extracting the dilute alkaline solution from the sedimentation tank to re-circulate through the phosphate removal filters.

12. A tertiary effluent treatment process as claimed in claim 11, wherein, the process further comprises the steps of:
xv) making up the dilute alkaline solution with at least part treated water from the treated water tank and part re-circulated dilute alkaline solution from the sedimentation tank.

13. A tertiary effluent treatment process as claimed in any preceding claim, wherein, the process further comprises the step of:
xvi) adding chlorine to the filtered effluent prior to delivering the filtered effluent to the series of two or more phosphate removal filters.

14. A tertiary effluent treatment process as claimed in any preceding claim, wherein, each of the plurality of polymer-based beads comprises a plurality of cavities and channels so as to form a sponge-like constitution, whereby substantially all of the surfaces in the cavities, in the channels and on the exterior of the bead are coated with nano-particles of iron oxide.

15. A tertiary effluent treatment assembly comprising an inlet to receive effluent from a wastewater treatment plant, a primary sand filter to remove suspended solids and particles having a diameter greater than 5 microns from the effluent received from the wastewater treatment plant;
a series of two or more phosphate removal filters to receive the filtered effluent, each phosphate removal filter comprising a plurality of polymer-based beads having nano-particles of iron oxide coated thereon;
a treated water tank to receive the filtered phosphate-depleted effluent as treated water;
a discharge tank to receive the treated water from the treated water tank;
an outlet to discharge the treated water from the discharge tank.
